# DEMANDE DE BREVET EUROPEEN

(11) **EP 2 500 275 A2**
(43) Date de publication de la demande: **19.09.2012**
(21) Numéro de dépôt: 12157928.8
(22) Date de dépôt: 02.03.2012
(51) Int. Cl.: B64G 1/50, F28D 15/02

(54) **Panneau structural de satellite avec échangeurs thermiques intégrés**

(30) Priorité: 17.03.2011 FR 1100807
(71) Demandeur: Thales, 92200 Neuilly Sur Seine (FR)
(72) Inventeur: Hugon, Julien, 83440 Montauroux (FR); Dargent, Thierry, 06810 Auribeau-Sur-Saigne (FR)
(74) Mandataire: Brunelli, Gérald

(57) **Abrégé**

Panneau structural (PS) pour satellite, comprenant une peau externe (PE) destinée à être à l'extérieur du satellite, une âme (AM) comprenant au moins un caloduc intégré (CAL) monté fixement en contact avec ladite peau externe (PE), et une peau interne (PI) destinée à être à l'intérieur du satellite, ledit panneau structural (PS) muni d'échangeurs de chaleur génériques adaptés pour être associés à un circuit de régulation thermique par circulation de fluide caloporteur, extérieur au panneau.

## Description

La présente invention porte sur un panneau structural pour satellites, notamment de communications.

Les satellites, notamment de communication ont une structure de coût élevé, notamment due à la conception de leur système de régulation thermique, classiquement réalisé par réseaux de caloducs.

Aussi la réalisation des structures de satellites ont un coût élevé, notamment due à la particularité du système de régulation de chaque satellite.

Un but de l'invention est réduire le coût de réalisation d'un satellite, et d'améliorer son système de régulation thermique.

Il est proposé, selon un aspect de l'invention, un panneau structural générique pour satellite, comprenant au moins un caloduc intégré monté fixement en contact avec ladite peau externe, et une peau interne destinée à être à l'intérieur du satellite. Le panneau structural est muni d'échangeurs de chaleur génériques adaptés pour être associés à un circuit de régulation thermique par circulation de fluide caloporteur, extérieur au panneau.

Aussi, un tel panneau est générique et permet de réduire le coût de réalisation de satellites, et de faciliter la réalisation du système de régulation thermique du satellite. Cela permet une grande modularité, et des coûts réduits.

Par exemple, ledit circuit de régulation thermique est un circuit thermique diphasique à pompage mécanique.

Dans un mode de réalisation, lesdits échangeurs de chaleur comprennent au moins un évaporateur et un condenseur.

Ainsi, il est possible de réaliser facilement un système de régulation thermique comprenant un circuit ou boucle de régulation à pompage mécanique, par exemple de type boucle diphasiqueà pompage mécanique ou MPL pour "two-phase mechanically pumped loop" en langue anglaise, ou de type pompe à chaleur ou HPS pour "heat pump system" en langue anglaise.

Selon un mode de réalisation, ledit condenseur est disposé en contact sur la peau externe du panneau en vis-à-vis d'au moins un caloduc de l'âme du panneau.

En variante, ledit condenseur est disposé en contact avec au moins un caloduc de l'âme du panneau.

Ainsi, de telles configurations permettent de limiter la dimension des échangeurs condenseurs puisque la chaleur est répartie dans le panneau par les caloducs. Cette compacité permet de minimiser les risques d'impacts des condenseurs par des micrométéorites.

Avantageusement, ledit évaporateur est disposé dans l'âme du panneau en contact avec la peau interne du panneau.

Ainsi, l'aménagement d'équipements dissipatifs sur le panneau structural est grandement facilité.

Dans un mode de réalisation, le panneau structural comprend au moins un ensemble de condenseurs reliés en série et/ou en parallèle par un conduit adapté pour être une partie dudit circuit de régulation thermique, extérieur au panneau.

Ainsi, chaque panneau peut être monté aisément dans le circuit de régulation thermique.

Avantageusement lesdits condenseurs et ledit conduit les reliant comprennent des parois extérieures durcies.

Les condenseurs compacts sont ainsi protégés des impacts, notamment de micrométéorites.

L'âme du panneau structural peut comprendre une structure comprenant un matériau thermiquement isolant ou thermiquement conducteur.

Ainsi, un découplage ou un couplage thermique d'échangeurs évaporateurs et condenseurs intégrés au sein d'un même panneau structural est envisageable selon le besoin et le type de boucle MPL ou HPS.

En outre, le panneau structural muni d'échangeurs de chaleur est adapté pour être reliés hydrauliquement en série et/ou en parallèle avec un ou plusieurs autres.

Il est également proposé, selon un autre aspect de l'invention, un satellite **caractérisé en ce qu'**il comprend au moins un panneau structural selon l'une des revendications précédentes.

L'invention sera mieux comprise à l'étude de quelques modes de réalisation décrits à titre d'exemples nullement limitatifs et illustrés par les dessins annexés sur lesquels :
- la figure 1 illustre schématiquement une vue de coupe selon un premier axe d'un panneau structural selon un aspect de l'invention ;
- la figure 2 illustre schématiquement une vue de coupe selon un deuxième axe, orthogonal au premier axe, d'un panneau structural selon un aspect de l'invention ;
- la figure 3 illustre schématiquement une vue de face de la peau interne d'un panneau structural selon un aspect de l'invention ;
- la figure 4 illustre schématiquement une vue de face de la peau externe d'un panneau structural, selon un aspect de l'invention ; et
- les figures 5a et 5b illustrent un panneau structural selon un aspect de l'invention, en tant que composant respectivement d'un système de régulation thermique de type boucle diphasique MPL (figure 5a) ou de type pompe à chaleur ou HPS (figure 5b) ;

Sur l'ensemble de figures, les éléments ayants les mêmes références sont similaires.

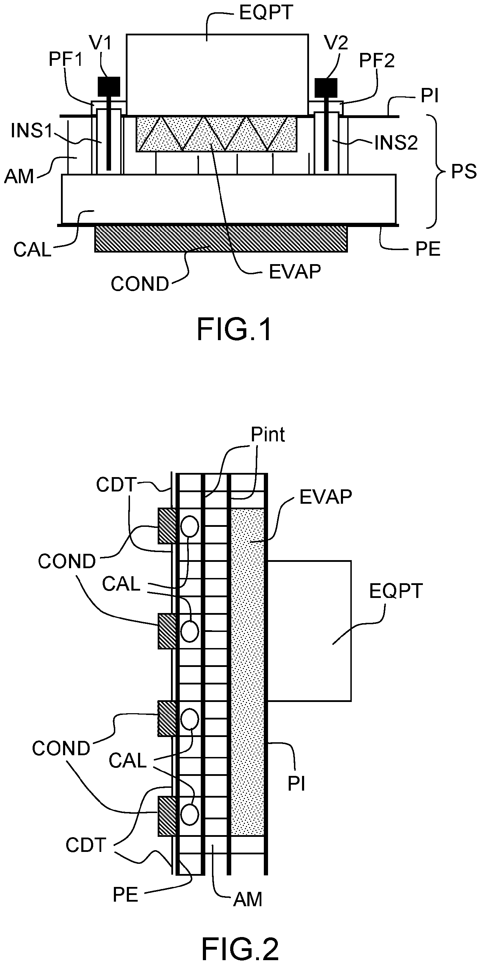

Sur la figure 1, est représenté une vue de coupe, selon un premier axe, d'un panneau structural PS pour satellite, comprenant une peau ou paroi externe PE destinée à être à l'extérieur du satellite , une âme AM, en l'occurrence en nid d'abeilles sur cet exemple, comprenant au moins un caloduc CAL disposé à proximité de la peau externe PE, et une peau ou paroi interne PI destinée à être à l'intérieur du satellite. Un tel panneau structural PS peut également avoir la dénomination de panneau de type sandwich. Un équipement EQPT, en l'occurrence muni de deux pattes de fixation PF1 et PF2, est fixé au panneau structural PS au moyen de deux inserts taraudés INS1 et INS2 et de deux vis V1 et V2 respectivement vissées dans les inserts taraudés INS1 et INS2 et les pattes de fixation PF1 et PF2. Des échangeurs de chaleurs intégrés au panneau PS sont représentés, en l'occurrence un évaporateur EVAP disposé dans l'âme AM à proximité de la peau interne PI, et un condenseur COND disposé sur la peau externe PE à l'extérieur du panneau PS ou directement sur un caloduc CAL.

La figure 2 représente une vue de coupe, selon un deuxième axe, orthogonal au premier axe. L'âme AM peut également comprendre des parois ou peaux intermédiaires Pint, par exemple de 0,1 à 0,2 mm d'épaisseur, et l'âme peut être une structure à nids d'abeilles en aluminium ou en matériau isolant telle de la fibre de verre.

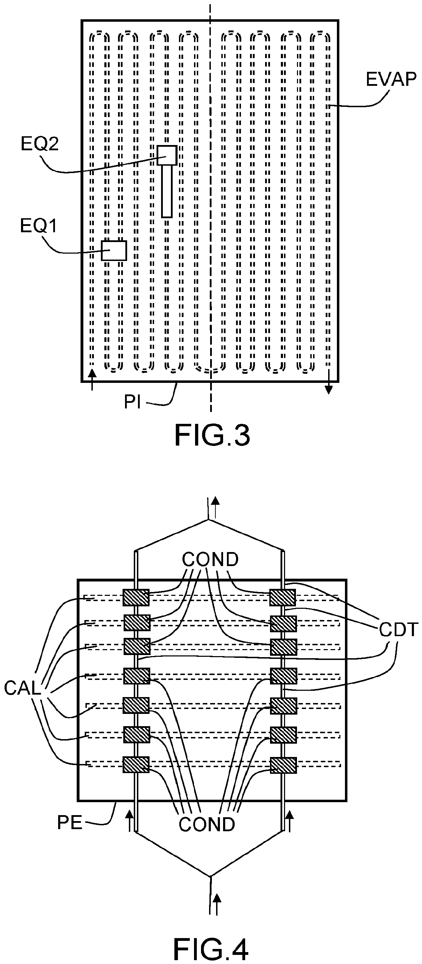

La figure 3 représente une vue de face de la peau interne PI du panneau PS, vue de l'extérieur du panneau PS correspondant à l'intérieur satellite, i.e. du côté de la face de la peau interne PI située à l'extérieur du panneau PS, sur laquelle on voit, par exemple, un évaporateur EVAP en forme de serpentin avec une entrée et une sortie, ce qui rend aisé un montage de plusieurs panneaux structuraux PS ensemble. Par exemple, le serpentin évaporateur EVAP peut prélever de la chaleur d'un premier équipement EQ1 et d'un deuxième équipement EQ2, qualifiés à deux niveaux de température différents T1 et T2, par exemple, T1 valant environ 65°C et T2 environ 85°C. En variante, d'autres configurations série et/ou parallèle sont envisageables.

La figure 4 représente une vue de face de la peau externe PE du panneau PS, vue de l'extérieur du panneau PS correspondant à l'extérieur satellite, i.e. du côté de la face de la peau externe PE située à l'extérieur du panneau PS, sur laquelle on voit un ensemble de condenseurs COND, par exemple disposé en deux séries de condenseurs COND alignés. Dans chaque série, les condensateurs COND sont reliés par un conduit CDT. Le panneau peut comprendre un nombre quelconque de séries de condenseurs COND. Sur la figure 4, est représenté un panneau structurant PS pouvant être associé à un circuit de régulation thermique, extérieur au panneau, assurant la circulation de fluide caloporteur.

Les échangeurs évaporateurs EVAP intégrés dans ces panneaux structuraux PS en contact avec la face interne de la peau interne PI (i.e. en contact avec la peau interne PI du panneau structural PS) peuvent comprendre des tubes qui circulent selon une configuration quelconque, en l'espèce (signifie sur cet exemple) en serpentin, avec un entraxe déterminé. Leur disposition et leurs dimensions sont compatibles avec les contraintes de fixation des équipements EQPT de la charge utile du satellite. La chaleur des équipements EQPT est transférée à ces tubes au sein desquels le fluide caloporteur qui circule est évaporé. Selon certains modes de fonctionnement des systèmes de régulation thermique, des échanges selon le mode convectif uniquement i,e. non diphasiques, sont envisageables. L'intérieur de ces tubes, par exemple de section circulaire, rectangulaire, ou carrée, peut être structuré pour améliorer les échanges thermiques, par exemple au moyen de rainures ou de mini-canaux. Cette zone d'évaporation étant isotherme (échanges diphasiques) et les tubes étant intégrés dans le panneau PS, les contraintes d'aménagement des équipements EQPT de la charge utile sont sensiblement diminuées par rapport à un contrôle thermique classique par caloducs, séparé en deux zones de températures (par exemple une zone d'équipements qualifiés à 65°C et une zone d'équipements qualifiés à 85°C). Cette flexibilité d'aménagement permet de réduire des longueurs de câblage nécessaires aux équipements EQPT de charge utile et d'avoir de meilleures performances radio fréquences pour la charge utile d'un satellite en général.

Pour protéger les échangeurs évaporateur EVAP contre un risque d'impacts de micrométéorites, des peaux ou parois intermédiaires Pint de faible épaisseur peuvent être interposées entre les peaux interne PI et externe PE des panneaux structuraux PS de type sandwich, au sein de l'âme AM. Ce type d'écran permet de diffuser les débris impactant le panneau PS, et ainsi minimiser le risque de perforation d'une conduite évaporateur.

Une pluralité de tels panneaux PS intégrant ces échangeurs évaporateur EVAP peuvent être reliés entre eux selon un agencement quelconque série et/ou parallèle, de manière à limiter les pertes de charge totale dans les tubes.

Les échangeurs condenseurs COND utilisés sont les plus compacts possible. Ils sont fixés sur des caloducs CAL formant un réseau parallèle intégré dans ces panneaux PS côté externe (i.e. en contact avec la peau externe PE). Pour minimiser les gradients thermiques par contact, échangeurs condenseurs COND et caloducs CAL peuvent aussi faire corps. Les échangeurs peuvent être des tubes, généralement de section circulaire, rectangulaire, ou carrée, dont l'intérieur peut être structuré pour améliorer les échanges thermiques, par exemple au moyen de rainures ou de mini-canaux. Les échangeurs condenseur COND sont reliés par des conduites formant le conduit CDT selon une configuration quelconque série et/ou parallèle, en l'espèce par ensembles alignés reliés en série. Un tel agencement des condenseurs COND offre le meilleur compromis thermohydraulique, et l'aménagement des condenseurs COND sur les caloducs CAL permet de limiter le diamètre requis pour ces derniers et ainsi de limiter leur longueur, ce qui limite le coût de la réalisation (minimisation de l'impact masse). L'utilisation de caloducs CAL de diamètre de 8 à 10 mm i.e. de faible masse linéique est possible. La chaleur des échangeurs est transférée via les caloducs CAL à la surface externe PE des panneaux PS faisant office de radiateur qui rejette efficacement la chaleur à l'aide d'un revêtement adapté tel un revêtement présentant un fort pouvoir émissif en infrarouge et un faible coefficient d'absorption du flux solaire comme de l'OSR pour "optical solar reflector" en langue anglaise, ou comme du SSM pour "second surface mirror" en langue anglaise. L'utilisation d'un revêtement radiatif de type peinture blanche est aussi envisageable.

Pour protéger les échangeurs condenseur COND contre un risque d'impact de micrométéorites, un durcissement des parois est requis, durcissement d'épaisseur modérée du fait d'un choix de compacité des échangeurs condenseurs choisis (surface d'exposition minimisée). Les parois des conduits CDT qui relient les échangeurs condenseurs COND sont elles aussi durcies pour résister à des impacts de micrométéorites. On privilégie donc des conduits CDT de faible section, dans la mesure du respect des contraintes thermo-hydrauliques, pour limiter l'impact de ce durcissement sur la masse du panneau structurant.

Un ensemble de tels panneaux structuraux PS intégrant ces échangeurs condenseur COND peuvent, par exemple, être reliés entre eux en parallèle de manière à effectuer un couplage thermique optimal et naturel vis à vis des conditions radiatives de rejet.

Ce type de panneau avec échangeur de chaleur peut faire l'objet d'un dimensionnement générique utilisable pour les deux circuits ou boucles de régulation à pompage mécanique, de type boucle diphasique MPL ou de type pompe à chaleur HPS.

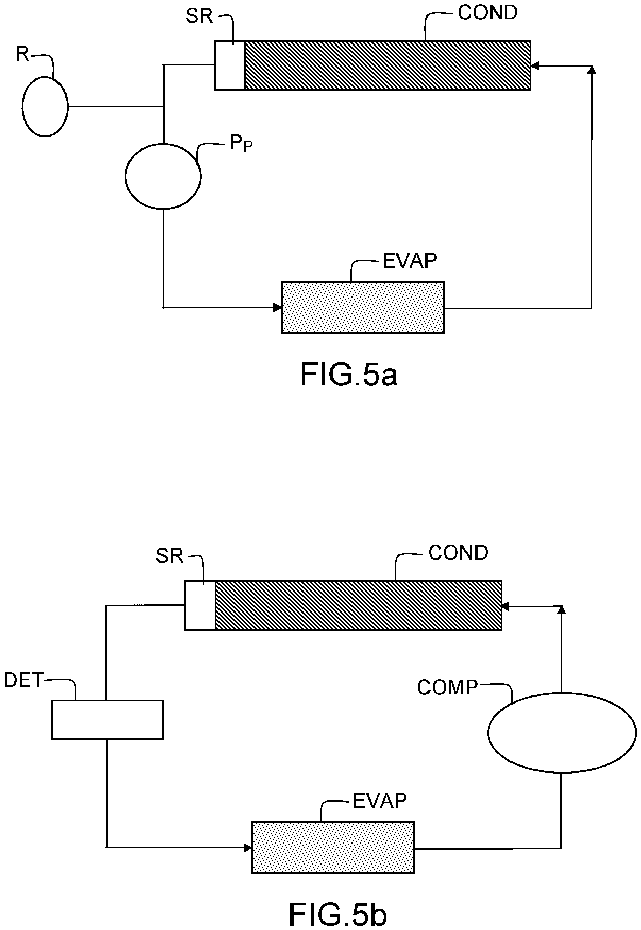

Si un circuit MPL est utilisé, tel qu'illustré sur la figure 5a, une pompe Pp et un accumulateur thermo-hydraulique ou réservoir R sont connectés aux échangeurs, en amont des échangeurs évaporateur EVAP en considérant le sens de circulation du fluide caloporteur de la boucle. En outre, un sous-refroidisseur SR est disposé entre les condenseurs COND et la pompe Pp, pour assurer un niveau de sous-refroidissement suffisant au fluide en entrée de pompe (prévention de la cavitation). L'âme AM des panneaux PS peut comprendre de l'aluminium car la boucle a un fonctionnement isotherme, ce qui minimise les problèmes de fuite thermique entre les peaux interne PI et externe PE du panneau PS.

Si un circuit HPS est utilisé, tel qu'illustré sur la figure 5b, en considérant le sens de circulation du fluide caloporteur dans la boucle, un compresseur COMP est disposé en aval des échangeurs évaporateurs EVAP et un détendeur DET est disposé en aval des échangeurs condenseurs COND et en amont des échangeurs évaporateurs EVAP. En outre, un sous-refroidisseur SR peut être disposé entre les condenseurs COND et le détendeur DET, pour augmenter le rendement du cycle frigorifique. Le circuit HPS est particulièrement intéressant lorsque la surface des panneaux PS n'est pas suffisante pour évacuer la dissipation totale d'énergie thermique émise par les équipements EQPT de la charge utile avec un circuit MPL (augmentation de la capacité de rejet par augmentation de la température des radiateurs). Lorsqu'un circuit HPS est utilisé, la température des peaux externes PE des panneaux PS d'un satellite peut être supérieure à la température des peaux internes PI. L'âme AM des panneaux PS est alors conçue isolante, par exemple conçu à base de fibres de verre pour minimiser les fuites thermique entre les deux peaux ou parois PI, PE d'un panneau PS.

L'ammoniac constituant un fluide caloporteur envisageable pour les deux systèmes MPL et HPS, la conception des échangeurs de chaleur intégrés au panneau PS peut être identique pour ces deux types de régulation thermique.

## Revendications

1. Panneau structural (PS) générique pour satellite, comprenant une peau externe (PE) destinée à être à l'extérieur du satellite, une âme (AM) comprenant au moins un caloduc intégré (CAL) monté fixement en contact avec ladite peau externe (PE), et une peau interne (PI) destinée à être à l'intérieur du satellite, **caractérisé en ce qu'**il est muni d'échangeurs de chaleur génériques adaptés pour être associés à un circuit de régulation thermique par circulation de fluide caloporteur, extérieur au panneau (PS).

2. Panneau structural (PS) selon la revendication 1, dans lequel ledit circuit de régulation thermique est un circuit thermique diphasique à pompage mécanique.

3. Panneau structural (PS) selon la revendication 1 ou 2, dans lequel lesdits échangeurs de chaleur comprennent au moins un évaporateur (EVAP) et un condenseur (COND).

4. Panneau structural (PS) selon la revendication 3, dans lequel ledit condenseur (COND) est disposé en contact sur la peau externe (PE) du panneau en vis-à-vis d'au moins un caloduc (CAL) de l'âme (AM) du panneau (PS).

5. Panneau structural (PS) selon la revendication 3, dans lequel ledit condenseur (COND) est disposé en contact avec au moins un caloduc (CAL) de l'âme (AM) du panneau.

6. Panneau structural (PS) selon l'une des revendications 3 à 5, dans lequel ledit évaporateur (EVAP) est disposé dans l'âme (AM) du panneau en contact avec la peau interne (PI) du panneau (PS).

7. Panneau structural (PS) selon l'une des revendications 3 à 6, comprenant au moins un ensemble de condenseurs (COND) reliés en série et/ou en parallèle par un conduit (CDT) adapté pour être une partie dudit circuit de régulation thermique, extérieur au panneau.

8. Panneau structural (PS) selon la revendication 7, dans lequel lesdits condenseurs (COND) et le conduit (CDT) les reliant comprennent des parois extérieures durcies.

9. Panneau structural (PS) selon l'une des revendications précédentes, dans lequel l'âme (AM) du panneau structural comprend un matériau thermiquement isolant ou thermiquement conducteur.

10. Panneau structural (PS) selon l'une des revendications précédentes, adapté pour être reliés hydrauliquement en série et/ou en parallèle avec un ou plusieurs autres.

11. Satellite **caractérisé en ce qu'**il comprend au moins un panneau structural (PS) selon l'une des revendications précédentes.
